# EUROPÄISCHE PATENTSCHRIFT

(11) **EP 3 095 915 B1**
(45) Veröffentlichungstag und Bekanntmachung des Hinweises auf die Patenterteilung: **16.01.2019**
(21) Anmeldenummer: 15168523.7
(22) Anmeldetag: 20.05.2015
(51) Int. Cl.: E01C 7/18, E01C 7/32

(54) **APPLIKATION EINES WIRRGELEGES ZUM FAHRBAHNAUFBAU MIT VERBESSERTEN HAFTEIGENSCHAFTEN**
APPLICATION OF A FABRIC FOR ROADWAY STRUCTURE HAVING IMPROVED ADHESIVE PROPERTIES
APPLICATION D'UN TREILLIS POUR CONSTRUCTION DE BANDE DE ROULEMENT DOTÉE DE PROPRIÉTÉS ADHÉSIVES AMÉLIORÉES

(43) Veröffentlichungstag der Anmeldung: 23.11.2016
(73) Patentinhaber: Sika Technology AG, 6340 Baar (CH)
(72) Erfinder: Ackermann, Herbert, 8632 Tann (CH)
(74) Vertreter: Sika Patent Attorneys

(56) Entgegenhaltungen:
- EP-A1- 2 192 233
- EP-A1- 2 281 948
- WO-A1-2008/095215

## Beschreibung

### Technisches Gebiet

Die Erfindung betrifft das Gebiet der Abdichtung von Fahrbahnen auf einem Untergrund umfassend eine Tragstruktur.

### Stand der Technik

Fahrbahnen, welche auf einem Untergrund mit einer Tragstruktur, insbesondere auf einer Betontragstruktur, aufgebracht sind, sind häufig anzutreffen, insbesondere als Brücken. Derartige Betontragstrukturen werden typischerweise durch Bitumenbahnen abgedichtet. Als oberste Schicht wird im Strassenbau üblicherweise eine Tragschicht auf Bitumenbasis aufgebracht. Es stellt sich hierbei jedoch das Problem, dass ein guter Haftverbund zwischen der Tragschicht und dem Material des Untergrunds, z.B. einer Tragstruktur aus Beton oder Metall, gegebenenfalls mit einer darauf befindlichen Abdichtung, vorhanden sein muss, was natürlich die Haftungen aller Zwischenschichten mit umfasst. Insbesondere die Haftung zwischen Untergrund beziehungsweise weiteren Schichten auf dem Untergrund und Tragschicht auf Bitumenbasis stellt hierbei ein aufgrund der beteiligten Materialien sehr schwierig zu lösendes Problem dar.

Ein Ansatzpunkt zur Lösung dieses Problems liegt in der Verwendung von Gussasphalt als Haftmittel zwischen einer Kunststoffschicht des Untergrunds und der Tragschicht auf Bitumenbasis. Diese Systeme weisen jedoch den grossen Nachteil auf, dass zuerst der Gussasphalt bei hoher Temperatur aufgetragen werden muss und die Tragschicht auf Bitumenbasis erst nach dem Erkalten aufgetragen werden kann, was, einerseits aufgrund dieses zusätzlichen Schrittes, die Erstellung des Abdichtungs-, beziehungsweise Erstellungs-prozesses, der Fahrbahn verlängert und verteuert. Andererseits hat sich gezeigt, dass derartige Fahrbahnen, aufgrund der hohen Achslasten der die Fahrbahn benutzenden Fahrzeuge, sich ablösen und verformen und innert kurzer Zeiten zu ungewollten Schädigungen des Fahrbahnbelages führen.

WO 2008/ 095 215 A1 umgeht das Problem, indem eine Betonfahrbahn verwendet wird, die eine Betonfahrbahn auf einer Betontragstruktur mit einer dazwischen liegenden Flüssigkunststofffolie sowie einer Haftschicht zwischen Flüssigkunststofffolie und Betonfahrbahn beschreibt. Um die Haftung der Betonfahrbahn mit der Haftschicht zu gewährleisten, wird hierbei das Einstreuen von Quarzsand in die Haftschicht vor dessen Erhärtung vorgeschlagen.

Die EP 2 282 948 A1 beschreibt ein Verfahren zur Herstellung eines Fahrbahnaufbaus, wobei dieser eine Flüssigkunststofffolie auf einer Tragstruktur mit der Tragschicht auf Bitumenbasis durch eine Haftzusammensetzung verbindet. Diese Haftzusammensetzung wird unter anderem als Granulat eingesetzt.

Bei Einsatz von Granulat ist auch eine gleichmäßige Dosierung schwierig. Ferner ist es in der Regel erforderlich, das Granulat in einen zusätzlich aufzubringenden Primer einzubetten, um einen Materialverlust durch Windverwehungen zu vermeiden.

### Darstellung der Erfindung

Die Aufgabe der vorliegenden Erfindung ist es daher, ein Verfahren zur Herstellung eines Fahrbahnaufbaus zur Verfügung zu stellen, welches einfach und rationell erstellt werden kann und zu einem guten Haftverbund zwischen einem Untergrund, umfassend eine Tragstruktur, und einer Tragschicht auf Bitumenbasis führt. Des Weiteren soll es möglich sein, zusätzliche Oberflächenbehandlungen zu vermeiden und Wartezeiten zwischen der Applikation der einzelnen Schichten zu vermeiden. Zugleich sollten eine verbesserte Dosierbarkeit der Haftzusammensetzung und eine einfache Befestigung möglich sein.

Kernpunkt der vorliegenden Erfindung ist das Aufbringen eines Wirrgeleges bestehend aus einer Haftzusammensetzung, die mindestens ein Epoxid-Festharz und mindestens ein bei Raumtemperatur festes thermoplastisches Polymers enthält. Überraschenderweise zeigte sich dementsprechend, dass mit einem Verfahren gemäss Anspruch 1 dieses Problem gelöst werden kann.

Ein derartiger Fahrbahnaufbau weist gegenüber dem Stand der Technik einen vereinfachten Systemaufbau sowie eine kürzere Wartezeit auf. Ein weiterer Vorteil des erfindungsgemäßen Verfahrens liegt darin, dass auf einfache Weise die Applikation einer definierten Menge der Haftzusammensetzung möglich ist, so dass eine sehr gleichmäßige Dosierung erreicht werden kann. Ferner werden bei Windeinfall Verwehungen vermieden und die Applikation im Gefälle ist ohne ein Abfließen möglich. Zusätzlich kann das Wirrgelege auch in einfacher Weise durch mechanische Befestigung an den Untergrund angebunden werden, falls gewünscht.

In einer bevorzugten Ausführungsform kann das Wirrgelege bauseitig bzw. vor Ort direkt auf dem Untergrund durch Extrusion gebildet werden. Das Gelege wird über dessen Schmelztemperatur appliziert, agiert so als Schmelzkleber und bildet eine Haftung zum Untergrund. Auf diese Weise kann das Wirrgelege unmittelbar vor Applikation der Tragschicht auf Bitumenbasis aufgebracht werden, wobei die Extrusionsvorrichtung idealerweise in die Asphaltiermaschine integriert wird, so dass beide Schichten praktisch in einem Arbeitsgang gebildet werden können. Auf diese Weise können die sonst üblichen Wartezeiten zwischen der Herstellung der einzelnen Schichten signifikant verkürzt werden.

In einer weiteren bevorzugten Ausführungsform umfasst das Verfahren ferner das Aufbringen eines Primers und einer Flüssigkunststofffolie auf die Tragstruktur, um den Untergrund zu bilden. Das Wirrgelege kann dann auf die Flüssigkunststofffolie aufgebracht werden, wobei ein Kunststoffprimer auf die Folie als Haftvermittler appliziert werden kann, bevor das Wirrgelege aufgebracht wird, um eine Verbindung zu ermöglichen. Es ist aber überraschenderweise auch möglich, das Wirrgelege direkt auf die Flüssigkunststofffolie aufzubringen, ohne vorher einen Kunststoffprimer zu applizieren.

Wenn ein Primer zur Einbettung des Wirrgeleges nicht erforderlich ist, hat dies eine signifikante Kosten- sowie Zeitreduktion zur Folge, letztere weil die Aushärtung eines Primers nicht abgewartet werden muss.

Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt ein Verfahren zur Herstellung eines Fahrbahnaufbaus umfassend die Schritte
(i) Aufbringen eines Wirrgeleges aus einer Haftzusammensetzung, die mindestens ein Epoxid-Festharz und mindestens ein bei Raumtemperatur festes thermoplastisches Polymer enthält, auf einen Untergrund umfassend eine Tragstruktur, vorzugsweise eine Betonstruktur; und
(ii) Aufbringen einer Tragschicht auf Bitumenbasis.

Die Tragstruktur ist vorzugsweise ein Gebilde des Hoch- oder Tiefbaus. Insbesondere kann dies eine Brücke, eine Galerie, ein Tunnel, eine Auffahr- oder Abfahrrampe oder ein Parkdeck sein. Als bevorzugtes Beispiel einer derartigen Tragstruktur gilt eine Brücke. Diese für die Fahrbahn notwenige Tragstruktur ist eine Struktur aus einem Material, welche eine tragende Funktion aufweisen kann. Insbesondere ist dieses Material ein Metall oder eine Metalllegierung oder ein Beton, insbesondere ein armierter Beton, bevorzugt ein Stahlbeton.

Als meist bevorzugtes Beispiel einer derartigen Tragstruktur gilt eine Brücke aus Beton.

Primer sind dem Fachmann bekannt. Unter einem "Primer" wird in diesem Dokument im Allgemeinen eine dünne Schicht einer auf einem Substrat aufgebrachten Polymerzusammensetzung verstanden, welche die Haftung zwischen diesem Substrat und einem weiteren Substrat verbessert. Ein Primer weist bei Raumtemperatur fliessfähige Konsistenz auf und wird durch Aufstreichen, Anstreichen, Aufrollen, Aufsprühen, Giessen oder Aufpinseln auf das Substrat aufgebracht. Es ist zu bemerken, dass hierbei mit dem Term "fliessfähig" nicht nur flüssige, sondern auch höher viskose honigartige bis pastöse Materialen bezeichnen werden, deren Form unter dem Einfluss der Erdanziehungskraft angepasst wird.

Als "Raumtemperatur" wird in diesem Dokument eine Temperatur von 23 °C verstanden.

Als "Betonprimer" wird in diesem Dokument eine dünne Schicht eines auf dem Beton aufgebrachten Primers verstanden, welche die Haftung von Beton zu einem weiteren Substrat verbessert. Bevorzugte Betonprimer sind Primer auf Epoxidharzbasis. Insbesondere sind dies zweikomponentige Epoxidharz-Primer, deren eine (d.h. erste) Komponente ein Epoxidharz, insbesondere ein Epoxidharz auf Basis von Bisphenol-A-Diglycidylether, enthält, und die andere (d.h. zweite) Komponente einen Härter, insbesondere ein Polyamin oder ein Polymercaptan, enthält. Als besonders bevorzugt gelten Epoxidharz-Primer, welche keine Füllstoffe aufweisen. Weiterhin vorteilhaft sind die Betonprimer dünnflüssig, insbesondere mit einer Viskosität von unter 10'000 mPas, bevorzugt zwischen 10 und 1'000 mPas, bei 23°C, so dass sie in die Betonoberfläche eindringen können. Besonders bevorzugt als Betonprimer gelten zweikomponentige, dünnflüssige, Epoxidharzprimer, wie sie unter den Handelsreihennamen Sikafloor® oder Sikagard® von Sika Deutschland GmbH, beziehungsweise Sika Schweiz AG, vertrieben werden. Als Betonprimer besonders bevorzugt sind Sikafloor®-156 Grundierung und Sikagard®-186.

Als Betonprimer besonders bevorzugt sind Polyharnstoff-Primer, insbesondere zwei-komponentige Polyharnstoff-Primer. Dabei handelt es sich insbesondere um zwei-komponentige, schnellhärtende, lösungsmittelhaltige Primer, die sich durch eine lange Topfzeit auszeichnen und bei idealen Bedingungen nach 30 Minuten überarbeitet werden können. Der Einsatz dieser Primer resultiert dabei in einen weiteren Zeitvorteil. Ein Beispiel ist Sika® Concrete Primer von Sika Schweiz AG.

Für andere Materialien gibt es jeweils adäquate Primer, für Metall Metallprimer, insbesondere für Stahl Stahlprimer, wie sie dem Fachmann bekannt sind.

Als "Kunststoffprimer" wird in diesem Dokument eine dünne Schicht eines auf der Flüssigkunststofffolie aufgebrachten Primers verstanden, welche die Haftung von Flüssigkunststofffolie zu einem weiteren Substrat verbessert. Der Kunststoffprimer kann z.B. ein Polyurethan-Primer oder ein Epoxid-Primer sein. Als bevorzugte Kunststoffprimer gelten Primer auf Epoxidharzbasis. Besonders bevorzugte Kunststoffprimer stellen ebenso die obig genannten Polyharnstoff-Primer dar.

In einer bevorzugten Ausführungsform umfasst der Untergrund ferner eine Primerschicht auf der Tragstruktur und gegebenenfalls eine auf die geprimerte Tragstruktur aufgebrachte Flüssigkunststofffolie. Besonders bevorzugt umfasst der Untergrund eine Primerschicht auf der Tragstruktur und eine auf die geprimerte Tragstruktur aufgebrachte Flüssigkunststofffolie.

In einer bevorzugten Ausführungsform des Verfahrens zur Herstellung eines Fahrbahnaufbaus gemäß der vorliegenden Erfindung umfasst das Verfahren vor der Aufbringung des Wirrgeleges daher folgende Schritte zur Bildung des Untergrundes, wobei die Ausführung beider Schritte bevorzugt ist:
(i') Aufbringen eines Primers auf die Tragstruktur, vorzugsweise Aufbringen eines Betonprimers auf eine Betonstruktur oder Aufbringen eines Metallprimers auf Metall, insbesondere Stahl; und gegebenenfalls
(i") Aufbringen einer Flüssigkunststofffolie auf die nach Schritt (i') geprimerte Tragstruktur.

Weiterhin ist es bevorzugt, wenn zwischen Schritt (i') und Schritt (i"), sofern ausgeführt, in den Primer, bevorzugt in den Betonprimer oder Metallprimer, anorganische Einstreumittel, insbesondere Sand, bevorzugt Quarzsand, eingestreut werden. Um einen guten Verbund zwischen Einstreumittel und Primer, insbesondere Betonprimer oder Metallprimer, zu gewährleisten, ist es vorteilhaft, wenn dieses Einstreumittel vor dem Erhärten des Primers eingestreut wird.

Es ist bevorzugt, wenn dieses anorganische Einstreumittel eine maximale Korngrösse von kleiner als 1 mm, insbesondere zwischen 0,1 und 1 mm, bevorzugt zwischen 0,3 und 0,8 mm, aufweist. Die Menge derartiger Einstreumittel ist jedoch so zu bemessen, dass der Primer nicht vollflächig bedeckt wird, sondern dass im Aufbau stets Stellen vorhanden sind, wo der Primer in direktem Kontakt mit der Kunststofffolie ist.

Es wurde gefunden, dass die Verwendung von Einstreumittel vorteilhaft für den Verbund zwischen Flüssigkunststofffolie und Primer, beziehungsweise der Tragstruktur, ist. Mögliche, jedoch nicht die Erfindung limitierende, Erklärungen hierfür sind, dass der Primer die Kornoberfläche zumindest partiell umfliesst und so eine grössere Kontaktfläche zwischen Flüssigkunststofffolie und Primer geschaffen wird, und/oder dass durch die anorganischen Einstreumittel, die Primerschicht lokal stark verstärkt wird, so dass grössere Kräfte zwischen Flüssigkunststofffolie und Tragstruktur übermittelt, beziehungsweise aufgenommen, werden können und/oder dass durch die Einstreumittel eine rein mechanische Verankerung zwischen Flüssigkunststofffolie und Primer erfolgt, indem die in die Matrix des Primers eingebundenen Körner zu einer aufgerauhten Primer-Oberfläche führen und sich diese Körner in die Oberfläche der vorzugsweise elastischen Flüssigkunststofffolie einbetten. Im Falle einer vor Ort hergestellten Flüssigkunststofffolie, insbesondere durch ein Spritzverfahren hergestellt, erhält die Flüssigkunststofffolie eine bedeutend grössere Kontaktoberfläche, da sie auf eine Primeroberfläche appliziert wird, welche aufgrund der durch die Einstreumittel bedingten Aufrauhung eine bedeutend grössere Oberfläche aufweist.

In Bezug auf die Schichtdicke des Primers ist es dem Fachmann klar, dass diese natürlich auch stark von der Oberflächenrauhigkeit der Tragstruktur abhängig ist als auch davon, ob Einstreumittel verwendet werden oder nicht. Die mittlere Schichtdicke des Primers beträgt typischerweise zwischen 100 Mikrometern und 10 Millimetern, vorteilhaft ist die mittlere Schichtdicke der Primerschicht unter 3 mm, bevorzugt zwischen 0,1 und 2 mm.

Anschliessend wird bei der bevorzugten Ausführungsform in einem Schritt (i") eine Flüssigkunststofffolie auf die nach Schritt (i') geprimerte Tragstruktur aufgebracht.

Um als Flüssigkunststofffolie möglichst geeignet zu sein, muss die Flüssigkunststofffolie wasserdicht sein und sich auch unter längerem Einfluss von Wasser, beziehungsweise Feuchtigkeit, nicht zersetzen oder mechanisch beschädigt werden.

Als Flüssigkunststofffolien sind z.B. derartige Folien geeignet, wie sie für Abdichtungszwecke, insbesondere für den Dachbau oder für den Brückenabdichtungszweck bereits im Stand der Technik eingesetzt werden. Flüssigkunststofffolien sind insbesondere ein- oder mehrkomponentige Materialien, die vor Ort flüssig aufgebracht werden und zu einer Folie oder Abdichtung reagieren bzw. verfestigen.

Die Kunststofffolie sollte vorteilhaft ein zumindest geringes Ausmass an Elastizität aufweisen, beispielsweise durch Temperaturen verursachte Ausdehnungsunterschiede zwischen Asphalt und Tragstruktur oder durch Risse in der Tragstruktur oder der Tragschicht verursachte Spannungen überbrücken können, ohne dass die Flüssigkunststofffolie beschädigt wird oder reisst und die Dichtfunktion der Flüssigkunststofffolie beeinträchtigt würde.

Besonders bevorzugt sind Flüssigkunststofffolien auf Basis von Polyurethanen oder Polyharnstoffen oder Poly(meth)acrylaten oder Epoxidharzen, die bevorzugt als zwei-komponentige Produkte unter Bildung der Flüssigkunststofffolie vor Ort eingesetzt werden können.

Die Flüssigkunststofffolie wird insbesondere vor Ort hergestellt, z.B. durch eine Vernetzungsreaktion von reaktiven Komponenten, welche vor Ort gemischt und appliziert werden. Die Applikation kann maschinell oder von Hand erfolgen, z.B. durch Gießen, Aufstreichen oder Spritzen. Solche Flüssigkunststofffolien basieren in der Regel auf zweikomponentigen Produkten und sind auch als Flüssigkunststoffabdichtung bekannt.

Am meisten bevorzugt als Flüssigkunststofffolie oder Flüssigkunststoffabdichtung sind Folien oder Abdichtungen auf Basis von Polyurethan, Polyharnstoff oder Epoxidharz, die insbesondere aus zweikomponentigen Produkten gebildet werden. Besonders bevorzugt sind gespritzte Flüssigkunststofffolien aus zweikomponentigen Polyurethanen und insbesondere Flüssigkunststofffolien aus zweikomponentigem Polyharnstoff.

Die Flüssigkunststofffolie weist vorteilhaft eine Schichtdicke im Millimeterbereich auf, typischerweise zwischen 0,5 und 15 mm, bevorzugt zwischen 1 und 4 mm.

Erfindungsgemäß wird auf den Untergrund ein Wirrgelege bestehend aus einer Haftzusammensetzung aufgebracht. Die Haftzusammensetzung enthält mindestens ein Epoxid-Festharz und mindestens ein bei Raumtemperatur festes thermoplastisches Polymer.

Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (I) 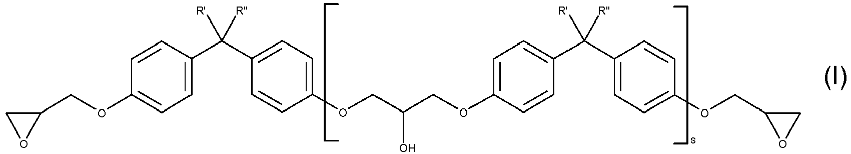 auf.

Hierbei stehen die Substituenten R' und R" unabhängig voneinander entweder für H oder CH₃. Weiterhin steht der Index s für einen Wert von > 1,5, insbesondere von 2 bis 12.

Derartige Epoxid-Festharze sind kommerziell erhältlich, z.B. unter den Handelsreihennamen D.E.R.™ bzw. Araldite® bzw. Epikote von Dow bzw. Huntsman bzw. Hexion und dementsprechend dem Fachmann bestens bekannt.

Verbindungen der Formel (I) mit einem Index s zwischen 1 und 1,5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1,5 aufweist.

Das bei Raumtemperatur feste thermoplastische Polymer ist insbesondere ein bei Raumtemperatur festes Polymer, welches bei einer Temperatur oberhalb der Erweichungstemperatur erweicht und schliesslich fliessfähig wird.

In diesem Dokument werden Erweichungstemperaturen oder Erweichungspunkte (Softening point) insbesondere als nach der Ring & Kugel-Methode gemäss DIN ISO 4625 gemessen verstanden.

Es ist sehr vorteilhaft, wenn das bei Raumtemperatur feste thermoplastische Polymer einen Erweichungspunkt im Bereich von 50 °C bis 150 °C, insbesondere von 90 °C bis 130 °C, aufweist. Besonders bevorzugt sind thermoplastische Polymere, welche einen Erweichungspunkt aufweisen, welcher mindestens 25 °C unterhalb der im Schritt (ii) beim Auftragen gemessenen Temperatur der Tragschicht auf Bitumenbasis liegt.

Als bei Raumtemperatur feste thermoplastische Polymere sind insbesondere Homopolymere oder Copolymere von mindestens einem olefinisch ungesättigten Monomeren, insbesondere von Monomeren, welche ausgewählt sind aus der Gruppe bestehend aus Ethylen, Propylen, Butylen, Butadien, Isopren, Acrylonitril, Vinylester, insbesondere Vinylacetat, Vinylether, Allylether, (Meth)acrylsäure, (Meth)acrylsäureester, Maleinsäure, Maleinsäureanhydrid, Maleinsäureester, Fumarsäure, Fumarsäureester und Styrol, geeignet.

Das Copolymer kann aus zwei, drei oder mehr unterschiedlichen Monomeren gebildet sein. Besonders geeignet sind Copolymere, welche lediglich aus den Monomeren der soeben aufgeführten Gruppe hergestellt werden.

Weiterhin besonders geeignet sind durch Pfropfungsreaktion modifizierte Copolymere von olefinisch ungesättigten Monomeren, insbesondere die durch Pfropfungsreaktion modifizierten Copolymere des vorgehenden Abschnitts.

Beispiele für das bei Raumtemperatur feste thermoplastische Polymer sind Polyolefine, insbesondere Poly-α-olefine. Meist bevorzugt sind ataktische Poly-α-olefine (APAO).

Bevorzugte feste thermoplastische Polymere sind Ethylen/VinylacetatCopolymere (EVA), insbesondere solche mit einem Vinylacetat-Anteil von unter 50 Gew.-%, insbesondere mit einem Vinylacetat-Anteil zwischen 10 und 40 Gew.-%, bevorzugt zwischen 20 und 35 Gew.-%, meist bevorzugt zwischen 27 und 32 Gew.-%.

Besonders bevorzugt ist ferner, dass es sich bei dem mindestens einen bei Raumtemperatur festen thermoplastischen Polymer um ein Terpolymer aus Ethylen, Acrylester, z.B. Ethylacrylat, und Maleinsäureanhydrid handelt.

Es hat sich als besonders bevorzugt erwiesen, wenn mindestens zwei verschiedene bei Raumtemperatur feste thermoplastische Polymere verwendet werden, welche bevorzugt eine unterschiedliche chemische Zusammensetzung aufweisen. Meist bevorzugt ist eines dieser zwei verschiedenen thermoplastischen Polymere ein Ethylen/Vinylacetat-Copolymer.

Weiterhin ist es vorteilhaft, wenn das weitere thermoplastische Polymer ein Copolymer ist, bei dessen Herstellung Maleinsäure oder Maleinsäureanhydrid als Monomer oder als Pfropfungsreagenz eingesetzt wurde.

Vorzugsweise liegt das Gewichts-Verhältnis von Epoxid-Festharz zu bei Raumtemperatur festem thermoplastischem Polymer in der Haftzusammensetzung zwischen 1:2 und 1:25, bevorzugt zwischen 1:4 und 1:20.

Weiterhin hat sich als bevorzugt erwiesen, wenn die Haftzusammensetzung ferner mindestens ein Klebrigmacher-Harz (tackifier resin) enthält, insbesondere auf Basis von Kohlenwasserstoffharzen, bevorzugt von aliphatischen Kohlenwasserstoffharzen, insbesondere wie sie z.B. von der Firma Exxon Mobil unter dem Handelsnamen Escorez™ vertrieben werden.

Als besonders vorteilhaft hat sich erwiesen, wenn die Haftzusammensetzung weiterhin mindestens ein chemisches oder physikalisches Treibmittel enthält.

Es kann sich hierbei um exotherme Treibmittel handeln, wie z.B. Azoverbindungen, Hydrazinderivate, Semicarbazide oder Tetrazole. Bevorzugte Treibmittel sind Azodicarbonamid und Oxy-bis(benzenesulfonyl-hydrazid). Diese Treibmittel setzen bei der Zersetzung Energie frei. Bevorzugt sind ferner auch endotherme Treibmittel, wie z.B. Natriumbicarbonat oder Natriumbicarbonat/ Zitronensäure-Mischungen. Derartige chemische Treibmittel sind z.B. unter dem Namen Celogen™ der Firma Chemtura erhältlich. Ebenfalls geeignet sind physikalische Treibmittel, wie sie unter dem Handelsnamen Expancel™ der Firma Akzo Nobel vertrieben werden.

Besonders geeignete Treibmittel sind solche, wie sie unter dem Handelsnamen Expancel™ der Firma Akzo Nobel oder Celogen™ der Firma Chemtura erhältlich sind.

Bevorzugte Treibmittel sind chemische Treibmittel, welche beim Erhitzen, insbesondere auf eine Temperatur von 100 bis 160 °C, ein Gas freisetzen.

Die Menge des physikalischen oder chemischen Treibmittels liegt insbesondere im Bereich von 0 - 3 Gew.-%, bevorzugt im Bereich von 0,2 bis 2 Gew.-% und besonders bevorzugt im Bereich von 0,5 bis 1,5 Gew.-%, bezogen auf das Gewicht der Haftzusammensetzung.

Weiterhin kann die Haftzusammensetzung gegebenenfalls mindestens einen Epoxid-Vernetzungskatalysator und/oder mindestens einen Härter für Epoxidharze enthalten. Dies ist aber nicht bevorzugt. Diese werden durch erhöhte Temperatur aktiviert. Die Epoxid-Vernetzungskatalysatoren und/oder Härter für Epoxidharze sind bevorzugt ausgewählt aus der Dicyandiamid, Guanaminen, Guanidinen, Aminoguanidinne und deren Derivate; substituierten Harnstoffen, insbesondere 3-(3-Chlor-4-methylphenyl)-1,1-dimethylharnstoff (Chlortoluron), oder Phenyl-dimethylharnstoffen, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-iso-Butyl-N',N'-dimethylharnstoff, 1,1'-(Hexan-1,6-diyl)bis(3,3'-dimethylharnstoff) sowie Imidazolen, Imidazol-Salzen, Imidazolinen und Amin-Komplexen. Diese wärmeaktivierbaren Härter sind vorzugsweise bei einer Temperatur von 80- 160 °C, insbesondere von 85 °C bis 150 °C, bevorzugt von 90 - 140 °C, aktivierbar. Insbesondere wird Dicyandiamid in Kombination mit einem substituierten Harnstoff eingesetzt.

Die Haftzusammensetzung kann gegebenenfalls zusätzlich weitere Bestandteile enthalten, z.B. Biozide, Stabilisatoren, insbesondere Wärmestabilisatoren, Weichmacher, Pigmente, Haftvermittler, insbesondere Organosilane, reaktive Bindemittel, Lösungsmittel, Rheologiemodifikatoren, Füllstoffe oder Fasern, insbesondere Glas-, Kohlenstoff-, Zellulose-, Baumwoll- oder synthetische Kunststofffasern, bevorzugt Fasern aus Polyester oder aus einem Homo- oder Copolymeren von Ethylen und/oder Propylen oder aus Viskose.

Die Haftzusammensetzung wird erfindungsgemäß in Form eines Wirrgeleges auf den Untergrund aufgebracht. Wirrgelege sind dem Fachmann bekannt. Bei dem Wirrgelege handelt es sich um ein Gelege aus einem oder mehreren Strängen aus der Haftzusammensetzung, die in einem unregelmäßigen Muster flächenmäßig angeordnet sind. Die Stränge können sich selbst und/oder andere Stränge überlappen. Bei den Strängen handelt es sich vorzugsweise um Endlosstränge.

Das Wirrgelege wird vorzugweise durch ein Extrusionsverfahren hergestellt, wobei die Haftzusammensetzung in einem Extruder aufgeschmolzen und durch einen oder mehrere Extrusionsköpfe auf eine Fläche, z.B. ein Förderband oder vor Ort direkt auf den Untergrund wie nachstehend geschildert, extrudiert wird, z.B. durch ein geeignetes Bewegungsschema des oder der Extrusionsköpfe und/oder der Fläche, auf der die Stränge abgelegt werden, und/oder Varianten des Auspressdrucks, wodurch der oder die extrudierten Stränge als Wirrgelege auf der Fläche abgelegt werden.

Bevorzugt weist der Extruder eine oder mehrere, z.B. 1 bis 4, übereinanderliegende Reihen von Extrusionsköpfen auf. Die Anzahl an Extrusionsköpfen bzw. Strängen für das Wirrgelege hängt z.B. von der Breite des zu bildenden Wirrgeleges ab, die Anzahl kann aber z.B. mindestens 10, z.B. 10 bis 400, bevorzugt 100 bis 300, pro m der Wirrgelegebreite betragen.

Der Querschnitt der Stränge kann beliebig sein, z.B. dreieckig, rechteckig, rund oder oval, wobei ein runder Querschnitt im Allgemeinen bevorzugt ist. Der Durchmesser der Stränge kann z.B. im Bereich von 0,5 mm bis 4 mm, bevorzugt von 1,0 mm bis 2,0 mm, liegen.

Die Dicke des Wirrgeleges kann z.B. im Bereich von 0,3 mm bis 20 mm, bevorzugt von 1,0 mm bis 5,0 mm, liegen.

Die Auftragsmenge des Wirrgeleges aus einer Haftzusammensetzung auf den Untergrund ist bevorzugt 200 bis 2000 g/m², besonders bevorzugt 400 bis 1500 g/m², bzw. ganz besonders bevorzugt 500 bis 1000 g/m².

Das Flächengewicht des Wirrgeleges beträgt bevorzugt von 0,2 bis 2,0 kg/m² und besonders bevorzugt von 0,5 bis 1,0 kg/m².

In einer bevorzugten Ausführungsform wird die Haftzusammensetzung vor Ort bzw. bauseitig extrudiert und der oder die extrudierten Stränge auf den Untergrund gelegt, um das Wirrgelege zu bilden, d.h. das Wirrgelege wird direkt auf der Baustelle auf dem Untergrund gebildet. Hierzu kann die Haftzusammensetzung z.B. in Form von Pellets angeliefert werden und wie vorstehend erläutert in einem Extruder vor Ort aufgeschmolzen und direkt auf den Untergrund extrudiert werden, um das Wirrgelege zu bilden. Auf diese Weise kann in einfacher Weise eine definierte Menge der Haftzusammensetzung appliziert werden.

Durch die Bildung des Wirrgeleges vor Ort direkt auf den Untergrund werden die Stränge im geschmolzenen Zustand oder noch warmen Zustand auf den Untergrund aufgebracht, so dass ein vorteilhafter Haftverbund zu dem Untergrund erreicht wird. Dies ist besonders vorteilhaft, wenn das Wirrgelege direkt auf die Tragstruktur aufgebracht wird, d.h. ohne Primer bzw. Grundierung zwischen der Tragstruktur und dem Wirrgelege.

Das Wirrgelege kann alternativ vorfabriziert sein. Die Herstellung erfolgt ebenfalls durch Extrusion, wie vorstehend für die Herstellung vor Ort erläutert, außer dass die extrudierten Stränge nicht direkt auf den Untergrund sondern in einer Produktionsanlage z.B. auf ein Laufband extrudiert werden. Auf diese Weise wird eine Bahn des Wirrgeleges produziert, die z.B. in Form von Rollen angeliefert werden kann. Eine Stützung des Wirrgeleges, z.B. durch eine Unterlage oder Folie, ist nicht notwendig. Die Rollen können z.B. eine Breite von bis zu 3 m aufweisen. Die vorfabrizierte Rolle bzw. Bahn kann vor Ort auf den Untergrund verlegt werden. Dadurch ist eine gute Dosierbarkeit gewährleistet. Das Wirrgelege kann bei Bedarf auf den Untergrund, vorzugsweise mechanisch mittels eines Klebebandes, befestigt werden.

Das Wirrgelege wird auf den Untergrund aufgebracht, wobei das Wirrgelege z.B. auf die Tragstruktur, die geprimerte Tragstruktur oder auf die Flüssigkunststofffolie des Untergrunds aufgebracht werden kann.

In einer ersten bevorzugten Ausführungsform wird das Wirrgelege direkt auf die Tragstruktur oder eine geprimerte Tragstruktur aufgebracht, wobei das direkte Aufbringen des Wirrgeleges auf die Tragstruktur, d.h. ohne Einsatz einer Grundierung bzw. eines Primers zwischen Untergrund und Wirrgelege, bevorzugt ist. Das direkte Aufbringen auf die Tragstruktur ist insbesondere dann bevorzugt, wenn das Wirrgelege vor Ort direkt auf der Tragstruktur durch Extrusion und Ablegen des oder der extrudierten Stränge gebildet wird.

In einer weiteren bevorzugten Ausführungsform wird das Wirrgelege auf einen Untergrund aufgebracht, wobei der Untergrund eine Flüssigkunststofffolie auf einer geprimerten Tragstruktur umfasst. Das Verfahren zur Bildung dieses Untergrunds wurde bereits vorstehend erläutert. Bei dieser Ausführungsform wird das Wirrgelege auf die Flüssigkunststofffolie aufgebracht.

Bevorzugt ist hierbei, dass auf die Flüssigkunststofffolie ein Kunststoffprimer aufgebracht wird und das Wirrgelege innerhalb der Offenzeit des Kunststoffprimers auf den Primer appliziert wird. Als Kunststoffprimer eignen sich z.B. Polyurethan-, Polyharnstoff- oder Epoxid-Primer, bevorzugt Epoxid-Primer, wobei der Primer einkomponentig oder bevorzugt zweikomponentig ist.

Die Offenzeit ist die Zeit, in der der aufgebrachte Kunststoffprimer noch flüssig oder klebrig ist, d.h. der Primer ist noch nicht gehärtet.

In einer weiteren bevorzugten Ausführungsform wird das Wirrgelege auf die Flüssigkunststofffolie aufgebracht, ohne dass vorher ein Primer auf die Flüssigkunststofffolie aufgebracht wird. Bei dieser Ausführungsform kann das Wirrgelege gegebenenfalls mittels mechanischer Befestigung, insbesondere mit einem Klebeband, Anschweissen oder Erwärmen, z.B. mit einem Heissföhn, an der Flüssigkunststofffolie fixiert werden. Vorteilhaft ist die mechanische Befestigung. Dies führt zu einem vorteilhaften Haftverbund zwischen der Flüssigkunststofffolie und der Tragschicht auf Bitumenbasis und zu einem zusätzlichen Kosten- und Zeitvorteil, u.a. weil das Aushärten des Primers nicht abgewartet werden muss. Die Haftzusammensetzung weist sehr gute Klebeigenschaften im geschmolzenen oder angeschmolzenen Zustand auf, so dass ein Fixieren durch Erwärmen gut möglich ist.

Im Schritt (ii) schliesslich wird eine Tragschicht auf Bitumenbasis aufgebracht. Es ist bevorzugt, dass die Tragschicht auf Bitumenbasis direkt auf das Wirrgelege aufgebracht wird, vorzugsweise unmittelbar nach Aufbringen des Wirrgeleges.

Es ist besonders vorteilhaft, wenn diese Tragschicht auf Bitumenbasis direkt auf das Wirrgelege aus der Haftzusammensetzung aufgebracht wird. Bei dem Aufbringen einer Tragschicht auf Bitumenbasis wird das Wirrgelege angeschmolzen und so eine ausreichende Haftung zwischen beiden gewährleistet.

Es ist ferner bevorzugt, dass die Tragschicht auf Bitumenbasis unmittelbar nach Aufbringen des Wirrgeleges aufgebracht wird. Dies kann z.B. dadurch erreicht werden, dass in der Asphaltiermaschine zur Applikation der Tragschicht auf Bitumenbasis die Extrusionsvorrichtung zur Applikation des Wirrgeleges integriert ist. Auf diese Weise können beide Schichten in einem Arbeitsgang aufgetragen werden. Wartezeiten können vermieden werden.

Die Tragschicht auf Bitumenbasis stellt die Fahrbahn dar, welche in direktem Kontakt mit Fahrzeugen ist. Als Tragschicht auf Bitumenbasis kann bevorzugt Gussasphalt oder Walzasphalt dienen. Als Walzasphalt kann unter anderem Asphaltbeton oder Splittmastixasphalt, als Gussasphalt Asphaltmastix verwendet werden. Wenn die Tragschicht auf Bitumenbasis bzw. die bituminöse Tragschicht aus Walzasphalt ist, wird diese z.B. vor der Applikation auf eine Temperatur von typischerweise 140 °C bis 160 °C aufgeheizt und vorzugsweise mittels Walze aufgewalzt.

Der Einsatz von Gussasphalt und Walzasphalt als Straßenbelag, Bodenbelag oder für Abdichtungen ist dem Fachmann bestens bekannt.

Als Asphalttypen eignen sich insbesondere Asphalttypen mit einer Mischguttemperatur im Bereich von 100 bis 240 °C. Die vorzugsweise einzusetzenden Asphalttypen in der vorliegenden Erfindung sind Heißmischasphalt (hot mix asphalt, MHA), Warmmischasphalt (warm mix asphalt, WMA), Halbwarmmischasphalt (half warm mix asphalt) und Kaltasphalt (cold mix asphalt).

Das Aufbringen der bituminösen Tragschicht ist dem Fachmann bestens bekannt und wird deshalb hier nicht weiter erörtert.

Neben Bitumen kann die Tragschicht die dem Fachmann bekannten weiteren möglichen Bestandteile aufweisen. Der Fachmann kennt die Art und Menge der Bestandteile von Bitumen basierenden Zusammensetzungen, welche für die Erstellung von Fahrbahnen verwendet werden, bestens. Besonders wichtig hierbei ist die Tatsache, dass die Tragschicht üblicherweise in wesentlichem Umfang mineralische Füllstoffe, insbesondere Sand oder Splitt, aufweisen.

Beim Kontaktieren des aufgeschmolzenen Bitumens mit dem Wirrgelege aus der Haftzusammensetzung schmilzt das bei Raumtemperatur feste thermoplastische Polymer und gegebenenfalls andere schmelzbare Komponenten des Wirrgeleges je nach deren Schmelzpunkt an oder auf. Bei Aufschmelzen kann das Wirrgelege eine weitgehend homogene Thermoplastschicht ausbilden oder sich im Bitumen oberflächennah lösen und eine Thermoplast-enhaltende Grenzphasenschicht ausbilden. Es ist daher bei dem erfindungsgemäßen Verfahren auch möglich, dass das Wirrgelege aus der Haftzusammensetzung keine diskrete oder individuelle Schicht ausbildet.

Falls das Wirrgelege aus der Haftzusammensetzung ein chemisches oder physikalisches Treibmittel aufweist, wird beim Kontakt des aufgeschmolzenen Bitumens mit dem Wirrgelege das Treibmittel aktiviert, insbesondere unter Freisetzung von Gas, woraus eine zusätzliche Haftverbesserung resultiert.

Es wird auch als vorteilhaft angesehen, dass das Epoxid-Festharz bei erhöhter Temperatur, bereits alleine, vor allem aber unter dem Einfluss von Epoxid-Vernetzungskatalysatoren und/oder Härter für Epoxidharze und/oder Anhydridgruppen-aufweisende Verbindungen vernetzen kann.

Das Wirrgelege bildet vorzugsweise einen Haftverbund zwischen einer Flüssigkunststofffolie und der Tragschicht oder zwischen der Tragstruktur, die vorzugsweise aus Beton, Metall, insbesondere Stahl, oder eine Struktur auf Bitumenbasis ist, und der Tragschicht. In einer bevorzugten Ausführungsform handelt es sich bei der Tragstruktur um Metall, insbesondere Stahl, oder Beton.

Eine besonders bevorzugte Ausführungsform des Verfahrens umfasst die Schritte
(i) Aufbringen des Wirrgeleges direkt auf die Tragstruktur, vorzugsweise eine Betonstruktur, wobei die Haftzusammensetzung vor Ort extrudiert und der oder die extrudierten Stränge auf den Untergrund gelegt werden, um das Wirrgelege zu bilden, und
(ii) Aufbringen der Tragschicht auf Bitumenbasis direkt auf das Wirrgelege, vorzugsweise unmittelbar nach Aufbringen des Wirrgeleges.

Das direkte Aufbringen des Wirrgeleges auf die Tragstruktur erfolgt dabei insbesondere ohne vorheriges Aufbringen eines Primers auf die Tragstruktur. Die Tragschicht auf Bitumenbasis wird bevorzugt unmittelbar nach Aufbringen des Wirrgeleges appliziert.

Eine weitere besonders bevorzugte Ausführungsform des Verfahrens umfasst die Schritte
(i') Aufbringen eines Primers auf die Tragstruktur, vorzugsweise Aufbringen eines Betonprimers auf eine Betonstruktur oder Aufbringen eines Metallprimers auf Metall, insbesondere Stahl;
(i") Aufbringen einer Flüssigkunststofffolie auf die nach Schritt (i') geprimerte Tragstruktur,
(i) Aufbringen des Wirrgeleges auf die Flüssigkunststofffolie, und
(ii) Aufbringen einer Tragschicht auf Bitumenbasis.

Bei dieser besonders bevorzugten Ausführungsform handelt es sich bei der Tragstruktur insbesondere um eine Brücke, besonders bevorzugt um eine Brücke aus Beton oder Metall, insbesondere Stahl.

Die Flüssigkunststofffolie, die auf die geprimerte Tragstruktur aus Metall, inbesondere Stahl aufgebracht wird, ist bevorzugt eine Flüssigkunststofffolie auf Epoxidharzbasis, insbesondere eine zweikomponentige Flüssigkunststofffolie auf Epoxidharzbasis. Als Flüssigkunststofffolie kann z.B. SikaCor® HM Mastic von Sika Deutschland GmbH bzw. Sika Schweiz AG eingesetzt werden.

Als Primer, die auf eine Tragstruktur aus Metall, insbesondere Stahl, aufgebracht werden, eignen sich besonders bevorzugt Korrosionsschutzprimer.

Zum Aufbringen des Wirrgeleges auf die Flüssigkunststofffolie kann entweder auf die Flüssigkunststofffolie ein Kunststoffprimer aufgebracht werden und das Wirrgelege innerhalb der Offenzeit des Kunststoffprimers auf den Kunststoffprimer appliziert werden oder das Wirrgelege auf die Flüssigkunststofffolie aufgebracht werden, ohne dass vorher ein Kunststoffprimer auf die Flüssigkunststofffolie aufgebracht wird.

Der so hergestellte Fahrbahnaufbau zeigt einen dauerhaften Verbund unter den einzelnen Schichten, der auch unter grossen Achslasten langzeitig formstabil ist. Es entstehen somit bedeutend weniger schnell Ermüdungsrisse, welche die Abdichtfunktion des Fahrbahnaufbaus beeinträchtigen könnten. Die Verwendung des Wirrgeleges vermeidet zudem sonst erforderliche Vorbehandlung von Oberflächen und liefert eine verbesserte Haftung. In einer bevorzugten Ausführungsform wird zudem der Einsatz eines Primers auf einer Tragstruktur oder auf einer auf einem Untergrund befindlichen Flüssigkunststofffolie vermieden, was Kosten und Zeit in erheblichem Ausmaß einspart.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1: einen Querschnitt durch einen erfindungsgemäßen Fahrbahnaufbau;
- Fig. 2: einen Querschnitt durch einen weiteren erfindungsgemäßen Fahrbahnaufbau;
- Fig. 3: einen Querschnitt durch einen weiteren erfindungsgemäßen Fahrbahnaufbau;
- Fig. 4: die Herstellung eines Wirrgeleges durch Extrusion;
- Fig. 5: die Aufsicht auf die im Extrusionsverfahren eingesetzten Extrusionsköpfe;
- Fig. 6: das Wirrgelege, aufgebracht auf einen Untergrund.

Die Zeichnungen sind schematisch. Es sind nur die für das unmittelbare Verständnis der Erfindung wesentlichen Elemente gezeigt.

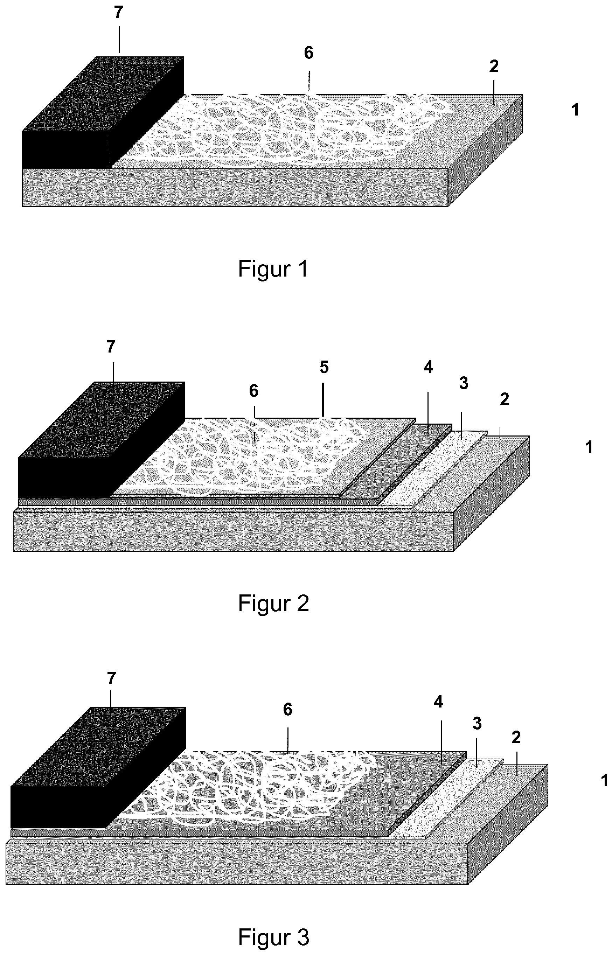

Figur 1 zeigt einen schematischen Querschnitt durch einen bevorzugten Fahrbahnaufbau 1, wobei auf einer Tragstruktur 2, bevorzugt einer Betontragstruktur, ein Wirrgelege aus der Haftzusammensetzung 6 aufgebracht ist und über dem Wirrgelege eine Tragschicht auf Bitumenbasis 7 aufgebracht ist.

Figur 2 zeigt einen schematischen Querschnitt durch einen weiteren bevorzugten Fahrbahnaufbau 1, bei dem auf eine Tragstruktur 2, vorzugsweise eine Betontragstruktur, ein Primer/Betonprimer 3 aufgebracht ist. Darauf befindet sich eine Flüssigkunststofffolie 4, auf die ein Kunststoffprimer 5 und nachfolgend das Wirrgelege aus einer Haftzusammensetzung 6 aufgebracht sind. Über dem Wirrgelege ist eine Tragschicht auf Bitumenbasis 7 aufgebracht.

Figur 3 zeigt einen schematischen Querschnitt durch einen Fahrbahnaufbau nach Figur 2 ohne einen Kunststoffprimer 5 auf der Flüssigkunststofffolie. Das Wirrgelege ist folglich direkt auf der Flüssigkunststofffolie aufgebracht. In dieser bevorzugten Ausführungsform kann das Wirrgelege aus einer Haftzusammensetzung gegebenenfalls z.B. mittels mechanischer Befestigung mit einem Klebeband oder durch Anschweissen oder Erwärmen mit der Flüssigkunststofffolie fixiert werden.

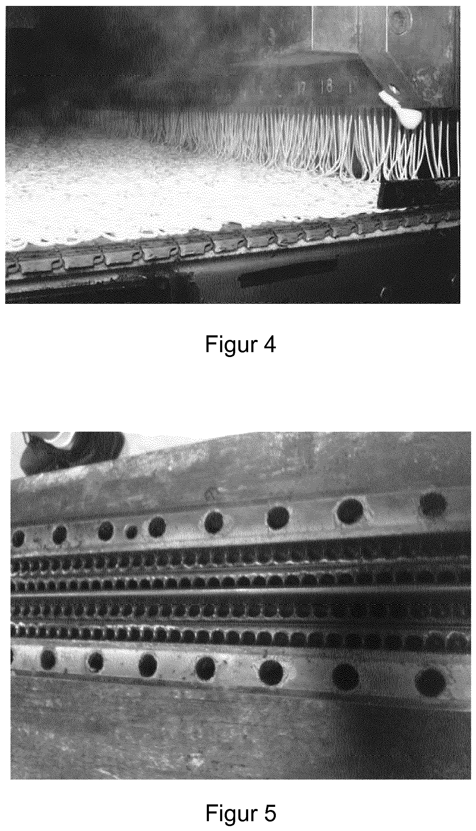

Figur 4 zeigt die Herstellung des Wirrgeleges durch Extrudieren der Haftzusammensetzung und Legen der extrudierten Stränge auf ein Förderband.

Figur 5 zeigt eine Aufsicht auf die Extrusionsköpfe für die Extrusion des Wirrgeleges.

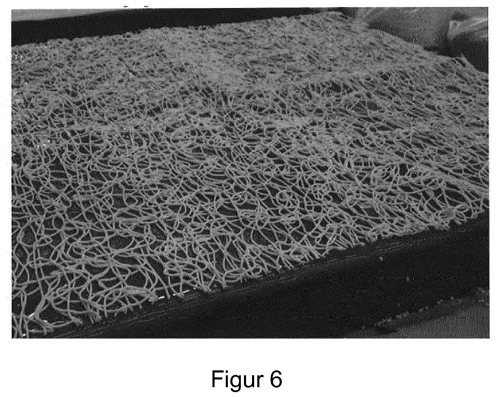

Figur 6 zeigt das auf einen Untergrund applizierte Wirrgelege.

### Bezugszeichenliste

- 1: Fahrbahnaufbau
- 2: Tragstruktur, vorzugsweise Betontragstruktur oder Metalltragstruktur
- 3: Primer, vorzugsweise Betonprimer oder Metallprimer
- 4: Flüssigkunststofffolie
- 5: Kunststoffprimer
- 6: Wirrgelege aus Haftzusammensetzung
- 7: Tragschicht auf Bitumenbasis

### Beispiele

Es wurde eine Haftzusammensetzung mit den in Tabelle 1 genannten Bestandteilen in den dort angegebenen Mengenanteilen hergestellt.

**Tabelle 1**

| | | Gew.-Teile |
|---|---|---|
| EVA | Ethylen/Vinylacetat-Copolymer (Vinylacetatgehalt 28 Gew.-%, Erweichungstemperatur (Ring & Kugel-Methode gemäss DIN ISO 4625): 106 °C | 25,0 |
| MAM-EVA | Maleinsäureanhydrid-gegepfropftes Ethylen/Vinylacetat-Copolymer (Maleinsäureanhydrid-Anteil: 0,2- 0,4 Gew.-%) | 23,4 |
| Araldite® | Epoxid-Festharz | 4,0 |
| Kohlenwasserstoffharz | Klebrigmacher-Harz | 10,0 |
| Kreide | Füllstoff | 36,8 |
| Natriumbicarbonat | Treibmittel | 0,8 |

Zur Herstellung der Haftzusammensetzung wurden die Bestandteile in einem Doppelschneckenextruder bei einer Temperatur von 80-120 °C miteinander vermischt. Durch anschliessende Granulierung wurden Pellets mit einem Durchmesser von etwa 1 bis 3 mm gebildet.

Aus dem Granulat wurde durch Extrusion ein Wirrgelege aus der Haftzusammensetzung gebildet. Fig. 3 zeigt das auf dem Untergrund mit der Flüssigkunststofffolie/Abdichtung (4) applizierte Wirrgelege. Die Durchmesser der Stränge betrugen 1 bis 2 mm.

### Beispiele 1 bis 3 (Bsp. 1-3)

Als Modell für einen Fahrbahnaufbau und zum Testen der mechanischen Werte wurden drei Beton-Platten der Grösse 50 x 50 x 6 cm jeweils mit Sikafloor®-161 (Primer, basierend auf 2-Komponenten-Epoxidharz, erhältlich bei Sika Schweiz AG) als Betonprimer in einer Menge von 0,3 bis 0,4 kg/m² beschichtet. Der Primer wurde mittels Filzroller auf die Betonstruktur aufgetragen. Nach einer Ablüftzeit von 12 Stunden wurde Sikalastic®-851 (2-komponentiges, lösemittelfreies, schnell härtendes Polyurethan) maschinell mittels einer 2-Komponenten-Hochdruckspritzanlage aufgespritzt, so dass sich eine Flüssigkunststoff-Folie (Foliendicke ca. 2,0 mm) bildete. Anschliessend wurde nach einer Wartezeit von 2 Stunden Sikafloor®-161 (Primer, basierend auf 2-Komponenten-Epoxidharz, erhältlich bei Sika Schweiz AG) als Kunststoffprimer in einer Menge von 0,4 kg/m² mittels Filzroller aufgetragen.

Es wurde anschliessend das Wirrgelege aus der Haftzusammensetzung wie vorstehend beschrieben in einer Menge von 0,73 kg/m² auf den noch klebrigen Kunststoffprimer aufgebracht. Nach einer Wartezeit von 24 Stunden wurde in zwei Arbeitsgängen ein auf 160 °C aufgeheizter WalzAsphalt AC T 16 N 70/100 in einer Menge von 0,8 bis 1,0 kg/m² aufgetragen, so dass sich jeweils eine Schichtdicke von 4 cm ergab, und eingewalzt.

### Referenzbeispiele 1 bis 3 (Ref. 1-3)

Die Herstellung der Modelle für einen Fahrbahnaufbau mit drei Beton-Platten gemäß den Beispielen 1 bis 3 wurde wiederholt, außer dass die Haftzusammensetzung nicht in Form eines Wirrgeleges, sondern in Form von Pellets ebenfalls in einer Menge von 0,73 kg/m² auf den noch klebrigen Kunststoffprimer aufgebracht wurde.

### Bewertung

Nach dem Erkalten wurden an den Modellen gemäß den Beispielen 1 bis 3 und den Referenzbeispielen 1 bis 3 nach einem Tag die Festigkeit in N/mm² gemäss Norm EN 13596, die Schubfestigkeit ("*SF*") gemäss Norm EN 13653 geprüft sowie das erhaltene Bruchbild visuell beurteilt. In allen Fällen zeigte sich stets ein Bruch entweder innerhalb der Asphaltschicht (grenzflächennah) oder in der Grenzphase zwischen der Haftzusammensetzung und dem Asphalt. Die so erhaltenen Resultate sind in den nachfolgenden Tabellen 2 und 3 zusammengefasst.

**Tabelle 2: Prüfergebnisse zur Festigkeit in [N/mm²].**

| | ***Ref.1*** | ***Ref.2*** | ***Ref.3*** | ***Bsp. 1*** | ***Bsp. 2*** | ***Bsp*. *3*** |
|---|---|---|---|---|---|---|
| Fläche [mm²] | *2496* | *2756* | *2862* | *2756* | *2703* | *2600* |
| Temperatur [°C] | *20,8* | *20,8* | *20,8* | *20,8* | *20,8* | *20,8* |
| Bruchlast [kN] | *1,44* | *2,55* | *2,74* | *2,76* | *2,72* | *2,36* |
| Festigkeit [N/mm²] | *0,57* | *0,93* | *0,96* | *1,00* | *1,01* | *0,91* |
| Anteil kohäsiver Bruch³ [%] | *90* | *90* | *90* | *90* | *90* | *100* |
| Anteil adhäsiver Bruch⁴ [%] | *10* | *10* | *10* | *10* | *10* | *0* |

| | | | | | | |
|---|---|---|---|---|---|---|
| ³Kohäsiver Bruch innerhalb des Walzasphaltes ⁴Adhäsiver Bruch zwischen Walzasphalt und Haftzusammensetzung | | | | | | |

**Tabelle 3: Prüfergebnisse zur Festigkeit in [N/mm²].**

| | ***Ref.1*** | ***Ref.2*** | ***Ref.3*** | ***Bsp. 1*** | ***Bsp. 2*** | ***Bsp. 3*** |
|---|---|---|---|---|---|---|
| Fläche [mm²] | *25194* | *24860* | *24420* | *24200* | *24420* | *24090* |
| Schubspannung [N/mm²] | *0,80* | *0,99* | *0,91* | *0,94* | *1,16* | *1,02* |
| Anteil kohäsiver Bruch³ [%] | *100* | *100* | *100* | *100* | *95* | *90* |
| Anteil adhäsiver Bruch⁴ [%] | *0* | *0* | *0* | *0* | *5* | *10* |

| | | | | | | |
|---|---|---|---|---|---|---|
| ³Kohäsiver Bruch innerhalb des Walzasphaltes ⁴Adhäsiver Bruch zwischen Walzasphalt und Haftzusammen setzung | | | | | | |

Die Resultate zeigen, dass mit dem Wirrgelege mindestens dieselben Haftwerte, wie mit den Granulaten erzielt werden. Der Vorteil des Wirrgeleges besteht ferner insbesondere darin, dass eine gleichbleibende Flächenmenge pro m² und somit konstante Haftwerte auf der gesamten Fläche garantiert werden können.

### Beispiel 4:

Es wurde eine Haftzusammensetzung mit den in Tabelle 4 genannten Bestandteilen in den dort angegebenen Mengenanteilen hergestellt.

**Tabelle 4**

| | | Gew.-% |
|---|---|---|
| Ester | Terpolymer aus Ethylen, Acrylester und Maleinsäureanhydrid | 33,20 |
| Kohlenwasserstoffharz | Klebrigmacher-Harz | 10,00 |
| Kreide | Füllstoff | 54,40 |
| Araldite | Epoxid-Festharz | 2,00 |
| OBSH | Treibmittel | 0,40 |
| | | 100,00 |

Aus der Zusammensetzung wurden Granulat und ein Wirrgelege wie für die in Tabelle 1 beschriebene Zusammensetzung hergestellt. Die Beispiele 1- 3 und Referenzbeispiele 1- 3 wurden analog wiederholt, wobei statt der Zusammensetzung gemäß Tabelle 1 die Zusammensetzung gemäß Tabelle 4 verwendet wurde. Die Bewertung erfolgte analog wie für die Zusammensetzung der Tabelle 1, wobei ähnliche Ergebnisse erzielt wurden.

## Patentansprüche

1. Verfahren zur Herstellung eines Fahrbahnaufbaus umfassend die Schritte
(i) Aufbringen eines Wirrgeleges bestehend aus einer Haftzusammensetzung, die mindestens ein Epoxid-Festharz und mindestens ein bei Raumtemperatur festes thermoplastisches Polymer enthält, auf einen Untergrund umfassend eine Tragstruktur, vorzugsweise eine Betonstruktur; und
(ii) Aufbringen einer Tragschicht auf Bitumenbasis.

2. Verfahren nach Anspruch 1, **dadurch gekennzeichnet, dass** die Haftzusammensetzung vor Ort extrudiert und der oder die extrudierten Stränge auf den Untergrund gelegt werden, um das Wirrgelege zu bilden.

3. Verfahren nach Anspruch 1 oder Anspruch 2, **dadurch gekennzeichnet, dass** die Tragschicht auf Bitumenbasis direkt auf das Wirrgelege aufgebracht wird, vorzugsweise unmittelbar nach Aufbringen des Wirrgeleges.

4. Verfahren nach irgendeinem der Ansprüche 1 bis 3, **dadurch gekennzeichnet, dass** das Wirrgelege direkt auf die Tragstruktur aufgebracht wird, vorzugsweise ohne eine Primerschicht zwischen Tragstruktur und Wirrgelege.

5. Verfahren nach irgendeinem der Ansprüche 1 bis 3, wobei das Verfahren vor der Aufbringung des Wirrgeleges ferner folgende Schritte zur Bildung des Untergrundes umfasst:
(i') Aufbringen eines Primers auf die Tragstruktur, vorzugsweise Aufbringen eines Betonprimers auf eine Betonstruktur oder Aufbringen eines Metallprimers auf Metall, insbesondere Stahl; und
(i") Aufbringen einer Flüssigkunststofffolie auf die nach Schritt (i') geprimerte Tragstruktur.

6. Verfahren nach Anspruch 5, **dadurch gekennzeichnet, dass** auf die Flüssigkunststofffolie ein Kunststoffprimer aufgebracht wird und das Wirrgelege innerhalb der Offenzeit des Kunststoffprimers auf den Flüssigkunststoffprimer appliziert wird.

7. Verfahren nach Anspruch 5, **dadurch gekennzeichnet, dass** das Wirrgelege auf die Flüssigkunststofffolie aufgebracht wird, ohne dass vorher ein Kunststoffprimer auf die Flüssigkunststofffolie aufgebracht wird.

8. Verfahren nach Anspruch 7, **dadurch gekennzeichnet, dass** das Wirrgelege mittels mechanischer Befestigung, bevorzugt mit einem Klebeband, oder Anschweißen oder Erwärmen, bevorzugt mit einem Heissluftföhn, an der Flüssigkunststofffolie fixiert wird.

9. Verfahren nach irgendeinem der Ansprüche 1 und 3 bis 8, **dadurch gekennzeichnet, dass** das Wirrgelege gebildet wird durch Extrusion.

10. Verfahren nach irgendeinem der Ansprüche 1 bis 9, **dadurch gekennzeichnet, dass** das bei Raumtemperatur feste thermoplastische Polymer ein Ethylen/Vinylacetat-Copolymer oder ein Ethylen-Acrylester-Maleinsäureanhydrid-Terpolymer ist und/oder dass das mindestens eine bei Raumtemperatur feste thermoplastische Polymer einen Erweichungspunkt im Bereich von 50 °C bis 150 °C, vorzugsweise von 90 °C bis 130 °C, aufweist.

11. Verfahren nach irgendeinem der Ansprüche 1 bis 10, **dadurch gekennzeichnet, dass** das Gewichtsverhältnis von Epoxid-Festharz zu bei Raumtemperatur festem thermoplastischem Polymer in der Haftzusammensetzung zwischen 1:2 und 1:25, bevorzugt zwischen 1:4 und 1:20, liegt.

12. Verfahren nach irgendeinem der Ansprüche 1 bis 11, **dadurch gekennzeichnet, dass** die Haftzusammensetzung ein chemisches oder physikalisches Treibmittel enthält.

13. Verfahren nach irgendeinem der Ansprüche 1 bis 12, **dadurch gekennzeichnet, dass** das Wirrgelege den Haftverbund zwischen der Flüssigkunststofffolie und der Tragschicht oder zwischen der Tragstruktur und der Tragschicht bildet, wobei die Tragstruktur vorzugsweise aus Beton, Metall, insbesondere Stahl, oder eine Struktur auf Bitumenbasis ist, wobei bei dem Haftverbund zwischen der Flüssigkunststofffolie und der Tragschicht die Tragstruktur bevorzugt eine Brückentragstruktur aus Beton oder Stahl ist.

## Claims

1. Method for producing a roadway construction, comprising the steps of
(i) applying a random-laid web composed of an adhesive composition which comprises at least one solid epoxy resin and at least one thermoplastic polymer solid at room temperature to a substrate comprising a bearing structure, preferably a concrete structure; and
(ii) applying a bitumen-based bearing course.

2. Method according to Claim 1, **characterized in that** the adhesive composition is extruded on site and the extruded strand or strands are laid onto the substrate to form the random-laid web.

3. Method according to Claim 1 or Claim 2, **characterized in that** the bitumen-based bearing course is applied directly to the random-laid web, preferably immediately after application of the random-laid web.

4. Method according to any one of Claims 1 to 3, **characterized in that** the random-laid web is applied directly to the bearing structure, preferably without a primer layer between bearing structure and random-laid web.

5. Method according to any one of Claims 1 to 3, the method further comprising, prior to the application of the random-laid web, the following steps for forming the substrate:
(i') applying a primer to the bearing structure, preferably applying a concrete primer to a concrete structure or applying a metal primer to metal, more particularly steel; and
(i") applying a liquid-polymeric film to the bearing structure primed according to step (i').

6. Method according to Claim 5, **characterized in that** a polymeric primer is applied to the liquid-polymeric film, and the random-laid web is applied within the open time of the polymeric primer to the liquid-polymeric primer.

7. Method according to Claim 5, **characterized in that** the random-laid web is applied to the liquid-polymeric film without a polymeric primer being applied beforehand to the liquid-polymeric film.

8. Method according to Claim 7, **characterized in that** the random-laid web is fixed on the liquid-polymeric film by mechanical fastening, preferably with an adhesive tape, or by welding or heating, preferably with a hot-air blower.

9. Method according to any one of Claims 1 and 3 to 8, **characterized in that** the random-laid web is formed by extrusion.

10. Method according to any one of Claims 1 to 9, **characterized in that** the thermoplastic polymer solid at room temperature is an ethylene/vinyl acetate copolymer or an ethylene-acrylic ester-maleic anhydride terpolymer and/or **in that** the at least one thermoplastic polymer solid at room temperature has a softening point in the range from 50°C to 150°C, preferably from 90°C to 130°C.

11. Method according to any one of Claims 1 to 10, **characterized in that** the weight ratio of solid epoxy resin to thermoplastic polymer solid at room temperature in the adhesive composition is between 1:2 and 1:25, preferably between 1:4 and 1:20.

12. Method according to any one of Claims 1 to 11, **characterized in that** the adhesive composition comprises a chemical or physical blowing agent.

13. Method according to any one of Claims 1 to 12, **characterized in that** the random-laid web forms the adhesive bond between the liquid-polymeric film and the bearing course or between the bearing structure and the bearing course, the bearing structure preferably being of concrete, metal, more particularly steel, or being a bitumen-based structure, and, in the case of the adhesive bond between the liquid-polymeric film and the bearing course, the bearing structure is preferably a bridge bearing structure made of concrete or steel.

## Revendications

1. Procédé de fabrication d'une structure de chaussée, comprenant les étapes suivantes :
(i) l'application d'un treillis constitué par une composition adhésive, qui contient au moins une résine époxyde solide et au moins un polymère thermoplastique solide à température ambiante, sur un substrat comprenant une structure support, de préférence une structure en béton ; et
(ii) l'application d'une couche support à base de bitume.

2. Procédé selon la revendication 1, **caractérisé en ce que** la composition adhésive est extrudée sur le terrain et le ou les boudins extrudés sont placés sur le substrat afin de former le treillis.

3. Procédé selon la revendication 1 ou la revendication 2, **caractérisé en ce que** la couche support à base de bitume est appliquée directement sur le treillis, de préférence directement après l'application du treillis.

4. Procédé selon l'une quelconque des revendications 1 à 3, **caractérisé en ce que** le treillis est appliqué directement sur la structure support, de préférence sans couche primaire entre la structure support et le treillis.

5. Procédé selon l'une quelconque des revendications 1 à 3, dans lequel le procédé comprend en outre les étapes suivantes pour la formation du substrat avant l'application du treillis :
(i') l'application d'un agent primaire sur la structure support, de préférence l'application d'un agent primaire en béton sur une structure en béton ou l'application d'un agent primaire métallique sur un métal, notamment de l'acier ; et
(i") l'application d'une feuille en matière plastique liquide sur la structure support munie d'un agent primaire selon l'étape (i').

6. Procédé selon la revendication 5, **caractérisé en ce qu'**un agent primaire en matière plastique est appliqué sur la feuille en matière plastique liquide et le treillis est appliqué sur l'agent primaire en matière plastique liquide pendant le temps d'ouverture de l'agent primaire en matière plastique.

7. Procédé selon la revendication 5, **caractérisé en ce que** le treillis est appliqué sur la feuille en matière plastique liquide sans qu'un agent primaire en matière plastique ne soit appliqué au préalable sur la feuille en matière plastique liquide.

8. Procédé selon la revendication 7, **caractérisé en ce que** le treillis est fixé à la feuille en matière plastique liquide par une fixation mécanique, de préférence avec une bande adhésive, ou par soudage ou chauffage, de préférence avec un pistolet à air chaud.

9. Procédé selon l'une quelconque des revendications 1 et 3 à 8, **caractérisé en ce que** le treillis est formé par extrusion.

10. Procédé selon l'une quelconque des revendications 1 à 9, **caractérisé en ce que** le polymère thermoplastique solide à température ambiante est un copolymère d'éthylène/acétate de vinyle ou un terpolymère d'éthylène-ester acrylique-anhydride d'acide maléique, et/ou **en ce que** ledit au moins un polymère thermoplastique solide à température ambiante présente un point de ramollissement dans la plage allant de 50 °C à 150 °C, de préférence de 90 °C à 130 °C.

11. Procédé selon l'une quelconque des revendications 1 à 10, **caractérisé en ce que** le rapport en poids entre la résine époxyde solide et le polymère thermoplastique solide à température ambiante dans la composition adhésive est compris entre 1:2 et 1:25, de préférence entre 1:4 et 1:20.

12. Procédé selon l'une quelconque des revendications 1 à 11, **caractérisé en ce que** la composition adhésive contient un agent gonflant chimique ou physique.

13. Procédé selon l'une quelconque des revendications 1 à 12, **caractérisé en ce que** le treillis forme le joint adhésif entre la feuille en matière plastique liquide et la couche support ou entre la structure support et la couche support, la structure support étant de préférence à base de béton, d'un métal, notamment d'acier, ou étant une structure à base de bitume, dans le cas du joint adhésif entre la feuille de matière plastique liquide et la couche support, la structure support étant de préférence une structure support pontée en béton ou en acier.
